Europäisches Patentamt

European Patent Office

Office européen des brevets

(19)

(11) Numéro de publication : **0 072 465**
**B1**

# FASCICULE DE BREVET EUROPÉEN

(12)

(45) Date de publication du fascicule du brevet :
10.09.86

(21) Numéro de dépôt : 82106825.1

(22) Date de dépôt : 28.07.82

(51) Int. Cl.⁴ : **B 60 K 20/04**, **F 16 F 15/08**,
**F 16 F 1/38**

(54) Dispositif de filtrage de vibrations et de bruit.

(30) Priorité : 14.08.81 FR 8115743

(43) Date de publication de la demande :
23.02.83 Bulletin 83/08

(45) Mention de la délivrance du brevet :
10.09.86 Bulletin 86/37

(84) Etats contractants désignés :
BE DE FR GB IT NL SE

(56) Documents cités :
BE-A- 518 748
DE-A- 2 025 904
DE-A- 2 460 769
FR-A- 680 434
FR-A- 2 022 743
FR-A- 2 363 024
FR-A- 2 378 985
GB-A- 1 555 429
US-A- 3 539 234
US-A- 3 845 557

(73) Titulaire : REGIE NATIONALE DES USINES RENAULT
Boîte postale 103 8-10 avenue Emile Zola
F-92109 Boulogne-Billancourt (FR)

(72) Inventeur : Lamy, Jean-Michel
9. Villa brune
F-75012 Paris (FR)
Inventeur : Lebail, Albert
72, Boulevard National
F-92000 Nanterre (FR)

(74) Mandataire : Casalonga, Axel et al
BUREAU D.A. CASALONGA OFFICE JOSSE & PETIT
Morassistrasse 8
D-8000 München 5 (DE)

Jouve, 18, rue St-Denis, 75001 Paris, France

**Description**

La présente invention se rapporte à un dispositif de filtrage de bruit et de vibrations pour un levier de changement de vitesses à montage par rotule d'un véhicule automobile, selon le préambule de la revendication 1. Un tel dispositif de filtrage est connu par la demande DE-A-2 460 769.

Pour qu'un filtrage en vibrations et/ou bruit soit efficace, il est nécessaire que la pièce de filtrage soit très souple car les niveaux de l'énergie mise en œuvre par ces vibrations sont très faibles.

Si, en même temps, la pièce de filtrage subit ou doit transmettre des efforts très importants, le fait qu'elle soit très souple entraîne une déformation considérable, déformation qu'il ne serait possible de réduire que par l'utilisation d'une pièce relativement rigide, au détriment de l'effet de filtrage.

Ces deux exigences contradictoires se rencontrent par exemple dans les systèmes d'isolement d'une commande de boîte de vitesses par rapport au plancher d'un véhicule automobile. Lors de la manipulation de la commande de changement de vitesse, le conducteur du véhicule introduit des efforts très importants, ce qui entraîne une perte de course importante et prohibitive dans la manipulation en cas d'utilisation d'un filtrage établi en fonction des vibrations et/ou du bruit (pièce de filtrage souple) plutôt qu'en fonction des efforts à transmettre (pièce de filtrage rigide).

Suivant la demande DE-A-2 460 769, la pièce de filtrage est constituée par une matière souple et les protubérances prévues sur la surface de cette pièce tournée vers le logement ont sensiblement la même largeur à leur base et à leur sommet et occupent sensiblement la moitié de la surface de la pièce. De telles protubérances ne font qu'augmenter quelque peu la souplesse importante que la pièce de filtrage présente déjà dans son ensemble du fait de sa constitution par une matière souple. Cela procure un bon filtrage des vibrations et du bruit, mais ne permet pas une transmission des efforts avec une perte de course limitée.

La présente invention a pour objet un dispositif de filtrage pour une commande de changement de vitesse de véhicule automobile, assurant à la fois un bon filtrage des vibrations et/ou du bruit et une transmission à perte de course limitée des efforts.

Suivant l'invention, la pièce de filtrage est constituée par une matière ayant une dureté Shore comprise entre 50 et 70 et les protubérances présentent à leur base une largeur supérieure à la largeur à leur sommet et une hauteur égale ou supérieure à la largeur à leur base et occupent à leur base moins de la moitié de la surface de la base massive, de sorte qu'en absence de charge, seuls les sommets des protubérances portent contre ledit logement, les protubérances assurant ainsi, par leur élasticité, le filtrage des vibrations et des bruits, tandis que sous l'effet d'une charge lors de la manœuvre du levier de changement de vitesse, lesdites protubérances s'écrasent élastiquement jusqu'à ce que, après une perte de course limitée correspondant à la hauteur desdites protubérances, ladite base massive vienne en contact avec ledit logement et assure ainsi la transmission de la charge sans déformation notable de la base massive.

Afin d'éviter des sollicitations excessives des protubérances lors de la transmission des efforts, la base massive est avantageusement creusée autour desdites protubérances.

Les protubérances présentent avantageusement une section en triangle, de préférence sensiblement en triangle isocèle.

Suivant un mode de réalisation, lesdites protubérances se présentent sous la forme de groupes de protubérances séparées par des zones lisses, sans protubérance, de la surface de la base massive sur laquelle elles font saillie.

Du point de vue moulage, il est avantageux de réaliser les protubérances sous la forme de dents s'étendant sur toute la surface sur laquelle elles font saillie.

En se référant aux dessins annexés, on va décrire ci-après plus en détail un mode de réalisation illustratif et non limitatif d'un dispositif de filtrage conforme à l'intérieur appliqué à l'isolation de la commande de changement de vitesse par rapport au plancher d'un véhicule automobile ; sur les dessins :

la figure 1 est une coupe axiale d'un support de levier de changement de vitesse de véhicule automobile, avec le dispositif de filtrage conforme à l'invention entre ledit support et la rotule du levier de commande ;

la figure 2 est une coupe axiale de la pièce intermédiaire de filtrage de ce dispositif, suivant II-II de la figure 3 ;

la figure 3 est une vue en plan de la pièce intermédiaire de la figure 1 ;

la figure 4 est une coupe partielle suivant IV-IV de la figure 1, à plus grande échelle.

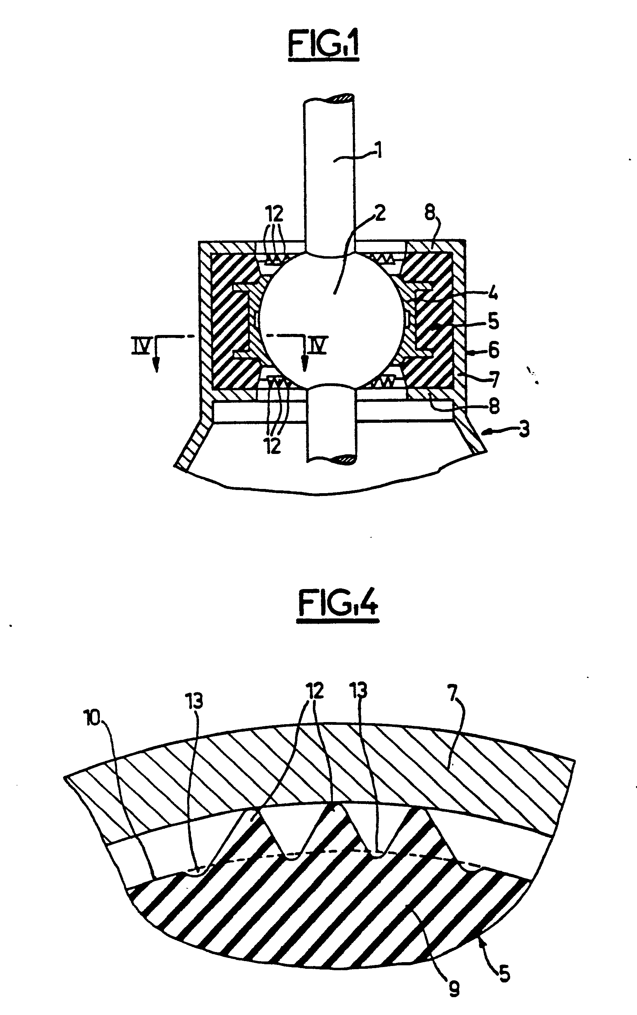

Selon la figure 1, un levier de commande de changement de vitesse 1 d'un véhicule automobile comporte une rotule 2 montée dans un support 3 fixée par exemple au plancher d'un véhicule automobile. La rotule 2 est montée dans un coussinet sphérique 4 porté par une pièce intermédiaire de filtrage 5 montée dans un logement 6 du support 3. Ce logement 6 comprend une partie cylindrique 7 et un rebord intérieur 8 à chaque extrémité de la partie cylindrique 7.

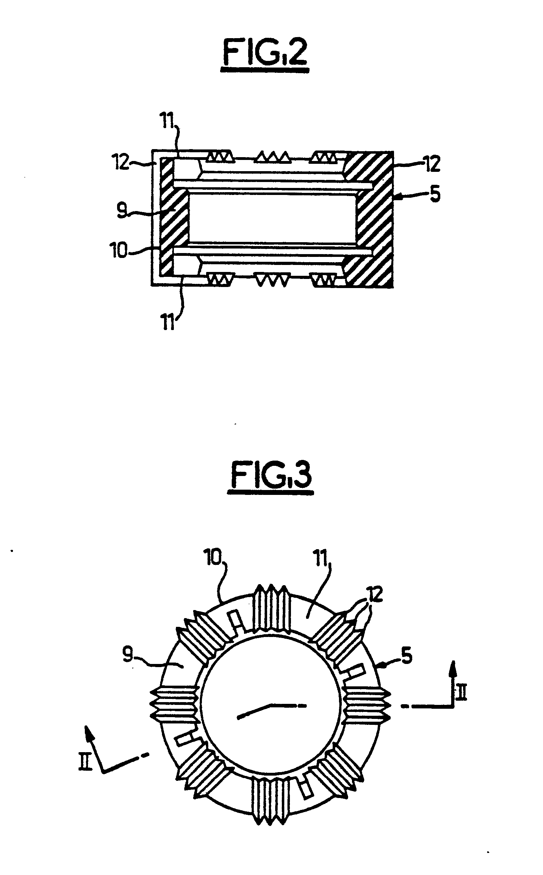

La pièce intermédiaire de filtrage 5 réalisée en une matière telle qu'un élastomère de dureté moyenne à élevée et de préférence en caoutchouc moulé ayant une dureté Shore de 60, présente, selon les figures 2 à 4, une base massive 9 de forme générale cylindrique. La base massive 9 porte, sur sa surface latérale cylindrique 10 et sur ses deux surfaces frontales 11, plusieurs groupes de dents 12. Dans l'exemple représenté, huit groupes de trois dents 12 font saillie sur les surfaces extérieures 10, 11 de la base massive 9 de la pièce 5, ces dents 12 s'étendant depuis l'une des surfaces frontales 11 par la surface latérale 10 à l'autre surface frontale 11.

On reconnaît sur la figure 4 que la surface latérale 10 est légèrement creusée en 13 autour des dents 12, cela aussi bien sur la surface latérale 10 que sur les surfaces frontales 11.

Seuls les sommets des dents 12 qui présentent ici une section en triangle isocèle se trouvent en contact avec le logement 6 (la surface cylindrique 7 sur la figure 4) lorsqu'aucune charge n'est appliquée à la pièce intermédiaire de filtrage 5. Cela procure à la pièce intermédiaire 5, dans ces conditions, une très faible raideur, d'où un filtrage efficace des vibrations et/ou du bruit.

Par contre, lorsqu'une charge est appliquée lors de la manœuvre du levier de changement de vitesse 1, cette charge est transmise par la rotule 2 et le coussinet sphérique 4 à la pièce intermédiaire 5. Les dents 12 de cette dernière s'écrasent ainsi jusqu'à hauteur de la surface latérale 10, 11 de la base massive 9 de la pièce 5. La surface 10, 11 de la base massive 9 vient ainsi en contact direct avec la partie 7, 8 du support 3.

La transmission de la charge s'effectue ainsi après une faible perte de course limitée au jeu correspondant à la hauteur des dents 12 par rapport à la surface extérieure 10, 11 de la base massive 9 de la pièce 5. Cette perte de course peut être limitée à volonté par la hauteur des dents 12. Le choix de la section des dents 12 se fait en fonction du niveau d'énergie des vibrations et bruits à filtrer.

A la place des dents triangulaires, il est également possible d'utiliser d'autres protubérances ayant avantageusement une section à la base qui est supérieure et de préférence de loin supérieure à la section au sommet. Les flancs convergents des protubérances peuvent être rectilignes ou curvilignes. De préférence, les protubérances n'occupent, à leur base, qu'une faible partie de la surface de la base massive sur laquelle elles font saillie, cette partie représentant avantageusement moins de 50 % et de préférence même moins de 30 % de ladite surface.

Il est également avantageux que la hauteur des protubérances qui est faible par rapport à l'épaisseur de la base massive soit égale ou supérieure à la largeur des protubérances à leur base.

## Revendications

1. Dispositif de filtrage de bruit et de vibrations pour un levier de changement de vitesses à montage par rotule d'un véhicule automobile, comprenant une pièce de filtrage (5) creuse réalisée en une matière élastiquement déformable et disposée entre deux éléments (4, 6) comprenant une cuvette sphérique recevant la rotule (2) du levier de changement de vitesses (1) et un logement (6) du support (3) du levier de changement de vitesses, la pièce de filtrage (5) présentant une base massive (9) dont la surface intérieure est en contact avec la cuvette sphérique (4) et dont la surface extérieure (10, 11) en regard dudit logement (6) présente des protubérances (12) en saillie dont la hauteur est inférieure à l'épaisseur de la base massive (9), les sommets desdites protubérances étant en contact avec ledit logement (6), caractérisé par le fait que ladite pièce de filtrage (5) est constituée par une matière ayant une dureté Shore comprise entre 50 et 70 et que lesdites protubérances (12) présentent à leur base une largeur supérieure à la largeur à leur sommet et une hauteur égale ou supérieure à la largeur à leur base et occupent à leur base moins de la moitié de la surface de la base massive (9), de sorte qu'en absence de charge, seuls les sommets des protubérances (12) portent contre ledit logement (6), les protubérances assurant ainsi, par leur élasticité, le filtrage des vibrations et des bruits, tandis que sous l'effet d'une charge lors de la manœuvre du levier de changement de vitesse, lesdites protubérances s'écrasent élastiquement jusqu'à ce que, après une perte de course limitée correspondant à la hauteur desdites protubérances, ladite base massive (9) vienne en contact avec ledit logement (6) et assure ainsi la transmission de la charge sans déformation notable de la base massive.

2. Dispositif suivant la revendication 1, caractérisé par le fait que la base massive (9) est creusée (en 13) autour desdites protubérances (12).

3. Dispositif suivant la revendication 1 ou 2, caractérisé par le fait que lesdites protubérances (12) présentent une section triangulaire.

4. Dispositif suivant l'une quelconque des revendications précédentes, caractérisé par le fait que lesdites protubérances (12) sont constituées par des dents s'étendant sur toute la surface (10) sur laquelle elles font saillie.

5. Dispositif suivant l'une quelconque des revendications précédentes, caractérisé par le fait que lesdites protubérances (12) se présentent sous la forme de groupes de protubérances séparées par des zones lisses, sans protubérances, de la surface (10, 11) sur laquelle elles font saillie.

## Claims

1. Noise- and vibration-damping device for a motor vehicle gear-change lever with a ball-joint mounting, comprising a hollow damping member (5) made of an elastically deformable material and arranged between two elements (4, 6) comprising a spherical cup receiving the ball (2) of the gear-change lever (1) and a housing (6) on the support (3) of the gear-change lever, the damping member (5) having a solid base (9), whose inner surface is in contact with the spherical cup (4) and whose outer surface (10, 11) facing the said housing (6) has projecting protuberances (12), the height of which is less than the thickness of the solid base (9), the tops of the said protuberances being in contact with the said housing (6), characterized in that the said damping member (5) consists of a material having a Shore hardness of between 50 and 70, and in that the said protuberances (12) have, at their base, a width greater than the width at their top and a height equal to or greater than the width at their base and occupy, at their base, less than half the surface of the solid base (9), so that, in the absence of any load, only the tops of the protuberances (12) bear against the said housing (6), the protuberances thus ensuring, by means of their elasticity, the damping of the vibrations and noise, whereas, under the effect of a load exerted when the gear-change lever is operated, the said protuberances are compressed elastically until, after a limited lost motion corresponding to the height of the said protuberances, the said solid base (9) comes into contact with the said housing (6) and thus ensures that the load is transmitted without any appreciable deformation of the solid base.

2. Device according to Claim 1, characterized in that the solid base (9) is recessed (at 13) round the said protuberances (12).

3. Device according to Claim 1 or 2, characterized in that the said protuberances (12) have a triangular cross-section.

4. Device according to any one of the preceding claims, characterized in that the said protuberances (12) consist of teeth extending over the entire surface (10) from which they project.

5. Device according to any one of the preceding claims, characterized in that the said protuberances (12) take the form of groups of protuberances separated by smooth protuberance-free zones of the surface (10, 11) from which they project.

**Patentansprüche**

1. Schall- und schwingungsdämmende Vorrichtung für einen Kugelgelenk-gelagerten Schalthebel eines Kraftfahrzeugs, die ein hohles Dämmstück (5) aus einem elastisch verformbaren Werkstoff, das zwischen zwei Elementen (4, 6) angeordnet ist, welche eine Kugelschale zur Aufnahme des K gelgelenks des Schalthebels (1) sowie ein Gehäuse (6) am Schalthebelträger (3) umfassen, wobei das Dämmelement (5) ein massives Basisteil (9) aufweist, dessen Innenfläche mit der Kugelschale (4) in Berührung steht und dessen Aussenfläche (10, 11) gegenüber dem Gehäuse (6) Vorsprünge (12) aufweist, deren Höhe geringer ist als die Dicke des massiven Basisteils (9), wobei die Scheitel der genannten Vorsprünge das genannte Gehäuse (6) berühren, dadurch gekennzeichnet, daß das genannte Dämmstück (5) aus einem Werkstoff mit einer Shore-Härte zwischen 50 und 70 besteht und daß die genannten Vorsprünge (12) an ihrer Grundfläche breiter sind als am Scheitel und ihre Höhe gleich oder größer ist als ihre Breite an der Grundfläche und daß sie an ihrer Grundfläche weniger als die Hälfte des massiven Basisteils (9) einnehmen, so daß im unbelasteten Zustand nur die Scheitel der Vorsprünge (12) am genannten Gehäuse (6) anliegen, wobei die Vorsprünge auf diese Weise durch ihre Elastizität die Schwingungen und Geräusche dämmen, währen im belasteten Zustand bei Betätigung des Schalthebels sich die genannten Vorsprünge elastisch zusammendrücken bis nach einem der Höhe der genannten Vorsprünge entsprechenden Hubverlust das genannte massive Basisteil (9) mit dem genannten Ghäuse (6) in Berührung kommt und auf diese Weise die Kraftübertragung ohne merkliche Verformung des massiven Basisteils sicherstellt.

2. Vorrichtung gemäß Anspruch 1, dadurch gekennzeichnet, daß das massive Basisteil (9) um die genannten Vorsprünge (12) (bei 13) ausgetieft ist.

3. Vorrichtung gemäß Anspruch 1 oder 2, dadurch gekennzeichnet, daß die genannten Vorsprünge (12) einen dreieckigen Querschnitt aufweisen.

4. Vorrichtung gemäß einem beliebigen der vorstehenden Ansprüche, dadurch gekennzeichnet, daß die genannten Vorsprünge (12) die Form von Zähnen haben, die sich über die ganze Fläche (10) erstrecken, über die sie vorspringen.

5. Vorrichtung gemäß einem beliebigen der vorstehenden Ansprüche, dadurch gekennzeichnet, daß die genannten Vorsprünge (12) in Gruppen zusammengefaß sind, wobei die einzelnen Gruppen durch glatte, vorsprungslose Bereiche der Fläche (10, 11), über die sie vorstehen, voneinander getrennt sind.

# FIG.1

# FIG.4

# FIG.2

# FIG.3